# EUROPEAN PATENT APPLICATION

(11) **EP 2 360 559 A1**
(43) Date of publication of application: **24.08.2011**
(21) Application number: 09826142.3
(22) Date of filing: 06.11.2009
(51) Int. Cl.: G06F 3/041, G06F 3/048

(54) **MOBILE TERMINAL, PAGE TRANSMISSION METHOD FOR A MOBILE TERMINAL AND PROGRAM**

(30) Priority: 11.11.2008 JP 2008289232
(71) Applicant: NEC Corporation, Minato-ku Tokyo 108-8001 (JP)
(72) Inventor: MIYOSHI, Yuka, Tokyo 108-8001 (JP)
(74) Representative: Betten & Resch
(86) International application number: PCT/JP2009/069303
(87) International publication number: WO 2010/055895

(57) **Abstract**

There are provided: a detection means for detecting user's touch; a moving speed calculating means for calculating a moving speed from a moving distance and a travel time of a detection position detected by the detection means; and a page turning means for indicating a plurality of pieces of data while sending the pieces of data one after another, wherein the page turning means indicates pieces of data while sending the pieces of data at a page turning speed decided in advance, determines a deceleration rate according to the moving speed calculated by the moving speed calculating means, and performs indication while decelerating the page turning speed gradually.

## Description

### Technical Field

The present invention relates to a mobile terminal operation of which is performed using a touch panel, a page turning method for a mobile terminal and a program.

### Background Art

In recent years, the volume of data that can be held in a terminal has been increased, and, along with this, the volume of data that a user handles has been also increased. Therefore, cases that a user handles a lot of data at one time have been increased.

However, in a conventional mobile terminal, when a page is turned, only a predetermined number of pages can be turned at one time of operation, and thus a burden on a user's operation has been increased.

For example, when only one page can be turned at one time of operation, operation by the number of times corresponding to the number of screens/images to be turned over is needed, and thus it is also a heavy burden and troublesome.

Accordingly, in patent document 1, for example, there is described a page turning control method for: monitoring a touched position and a touch time on a specified area; moving a plurality of pages when a same position has been touched for a long time; and, when the position has been moved, determining a direction of page turning and performing page turning based on the movement direction and the movement distance.
[Patent document 1] Japanese Patent Application Laid-Open No. Sho63-36426

### Disclosure of the Invention

### Problems to be Solved by the Invention

However, in the invention described in patent document 1, when a plurality of pages are moved by keeping touching a same position, the pages are turned with a similar speed, and thus there has been cases that the speed is so fast that a desired page passes away or that it is so slow that a long time is needed to reach the desired page, for example.

Accordingly, the present invention has been made in view of the above-mentioned problem, and its object is to provide a mobile terminal in which a desired page can be found at one time of moving operation.

### Means for solving the Problem

In order to solve the above-mentioned problem, a mobile terminal of the present invention comprises: a detection means for detecting user's touch; a moving speed calculating means for calculating a moving speed from a moving distance and a travel time of a detection position detected by the detection means; and a page turning means for indicating a plurality of pieces of data while sending the pieces of data one after another, wherein the page turning means indicates pieces of data while sending the pieces of data at a page turning speed decided in advance, determines a deceleration rate according to the moving speed calculated by the moving speed calculating means, and performs indication while decelerating the page turning speed gradually.

A page turning method for a mobile terminal of the present invention comprises: a detection step for detecting user's touch; a moving speed calculating step for calculating a moving speed from a moving distance and a travel time of a detection position detected in the detection step; and a page turning step for indicating a plurality of pieces of data while sending the pieces of data one after another, wherein the page turning step indicates the pieces of data while sending the pieces of data at a page turning speed decided in advance, determines a deceleration rate according to the moving speed calculated in the moving speed calculating step, and performs indication while decelerating the page turning speed gradually.

A program of the present invention comprises: a detection processing for detecting user's touch; a moving speed calculation processing for calculating a moving speed from a moving distance and a travel time of a detection position detected by the detection processing; and a page turning processing for indicating a plurality of pieces of data while sending the pieces of data one after another, wherein the page turning processing indicates the pieces of data while sending the pieces of data at a page turning speed decided in advance, determines a deceleration rate according to the moving speed calculated by the moving speed calculation processing, and performs indication while decelerating the page turning speed gradually.

### Advantage of the invention

According to the present invention, by reflecting an operation speed of a user in a page turning speed, page turning of a screen and an image according to user's operation becomes possible and thus an operability of a mobile terminal can be improved.

### Brief Description of the Drawings

Fig. 1 is a block diagram of a mobile terminal according to an exemplary embodiment of the present invention;
Fig. 2 is a functional block diagram of a mobile terminal according to an exemplary embodiment of the present invention;
Fig. 3 is a diagram illustrating page turning processing of a mobile terminal according to an exemplary embodiment of the present invention;
Fig. 4 is a flow chart of page turning processing;
Fig. 5 is an explanatory drawing of a bounce processing (just before stopping page turning); and
Fig. 6 is an explanatory drawing of a bounce processing (after stopping page turning).

### Best Mode for Carrying Out the Invention

Next, the best mode for carrying out the present inventing will be described in detail with reference to the drawings.

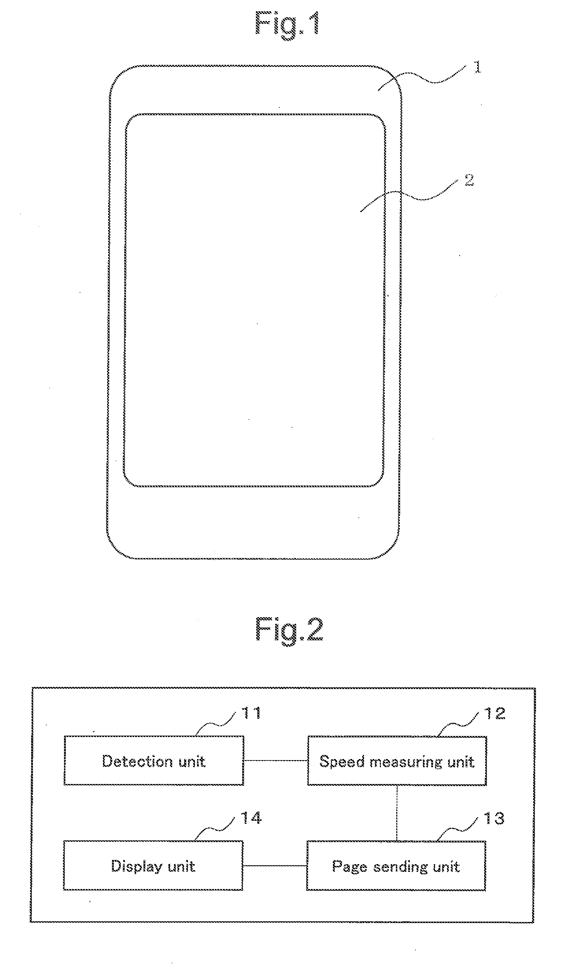

Fig. 1 is a block diagram of a mobile terminal with a touch panel in an exemplary embodiment of the present invention. A mobile terminal 1 with a touch panel is configured including a touch panel 2.

The touch panel 2 is provided on a display screen such as a liquid crystal display panel and a CRT (cathode-ray tube), and accepts user's input by being pressed by a pen, a finger tip or the like.

Meanwhile, although there are several modes for a touch panel, its range includes any kinds, and it includes a form of an electronic apparatus provided with a keyboard area and others as means of other input devices, and also includes an electronic apparatus having a different connection module provided with those other input devices.

Fig. 2 is a functional block diagram of a mobile terminal with a touch panel in an exemplary embodiment of the present invention. This mobile terminal with the touch panel is configured having a detection unit 11, a speed measuring unit 12, a page turning unit 13 and a display unit (LCD) 14.

In the touch panel which is an input device that detects operational intention such as a contact position, the detection unit 11 detects that a user has touched the touch panel. The display unit 14 is provided behind the touch panel, and it indicates a screen or an image about a function and operation by turning on a backlight arranged behind.

The speed measuring unit 12 calculates a moving speed from a moving distance when a finger has moved and a travel time needed for the movement. Meanwhile, the moving speed may be calculated from the travel time taken for a total moving distance of the finger move, and a calculation distance of a moving speed of the finger may be narrowed down to a fixed range in advance.

The page turning unit 13 determines a deceleration rate according to the moving speed calculated in the speed measuring unit 12, and a page turning speed is decelerated from a page turning speed decided in advance according to the deceleration rate. After that, page turning is stopped when the speed becomes less than a threshold value or when a finger touches the touch panel again.

That is, when a move of a finger is fast (a finger sweeps), a high deceleration rate is selected, and the number of pages to be turned is small and pages are turned slowly. On the other hand, when moving a finger slowly, a low deceleration rate is selected and the number of pages turned at a high speed becomes large, and it is effective to find data of a page number in the far back. Meanwhile, conversely, a low deceleration rate may be selected when a finger sweeps to realize long time high-speed page turning.

Also, regarding a selected deceleration rate, it may be configured such that, by providing a table for each of a plurality of threshold values of a finger moving speed, each deceleration rate is selected. But not limited to this, it may be also configured such that one of two deceleration rates is selected according to whether a moving speed of a finger exceeds a constant value or not.

An initial page turning speed and deceleration rate can be decided by a user arbitrarily, and, for example, it is possible to set an initial page turning speed to 5 pages /sec, and a deceleration rate to -2 pages /sec when a finger sweeps and -1 pages /see when a finger moves slowly.

Meanwhile, in page turning, all pages may be turned in a manner being made slid, or may be turned in a manner that a plurality of pages are skipped in a predetermined time interval.

By the movement direction of a finger, it is determined whether a page is turned or returned. That is, in a touch panel, when a finger moves in the forward direction against X axis, a page turning action is performed, and when a finger moves in the backward direction against X axis, a page returning action is performed. Meanwhile, it may be configured such that the turning and returning of a page is changed by the movement direction against Y axis similarly,

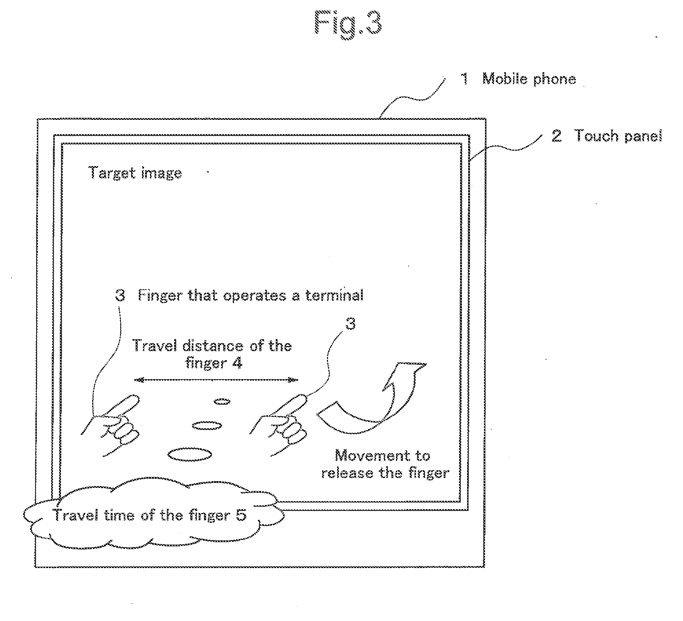

Next, page turning action of a mobile terminal in an exemplary embodiment of the present invention will be described in detail. Fig. 3 is a conceptual illustration of a page turning action in this exemplary embodiment.

That is, when a finger 3 for performing operation touches the screen of the touch panel 2 and starts moving, a moving speed is calculated from a travel distance 4 and a travel time 5 concerned, and, at the same time, page turning is begun according to a page turning speed decided in advance. After that, the page turning speed is decelerated using a deceleration rate which has been determined based on the calculated moving speed, and page turning is stopped when it becomes less than a threshold speed. By a user touching the touch panel during page turning, the page turning is also stopped.

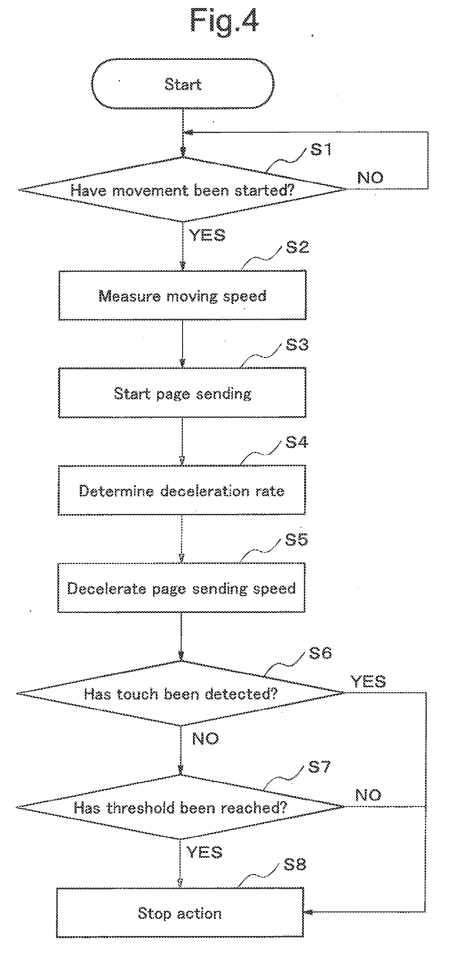

Fig. 4 is a flow chart of a page turning action of a mobile terminal in an exemplary embodiment of the present invention. When it is detected that a finger has been put on the touch panel and moved (Step S1), a moving speed of the finger is calculated from a travel distance and a travel time (Step S2).

Page turning is begun based on the decided page turning speed (Step S3), and a deceleration rate of the page turning speed is determined from the calculated moving speed (Step S4). Based on the determined deceleration rate, the turning speed of the being-turned pages is decelerated (Step S5).

Here, whether a touch panel has been touched again or not is determined (Step S6), and, when the touch panel has been touched while page turning is being performed, page turning is stopped (Step S8). When there is no touch operation from the user, it is then determined whether a page turning speed has reached less than a threshold value after it has been decelerated (Step S7), and, when the page turning speed has become less than the threshold value, page turning is stopped (Step S8),

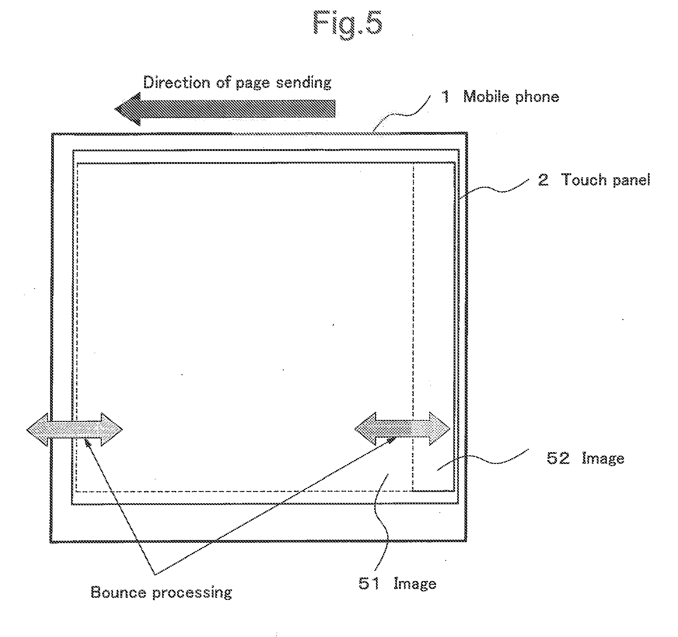

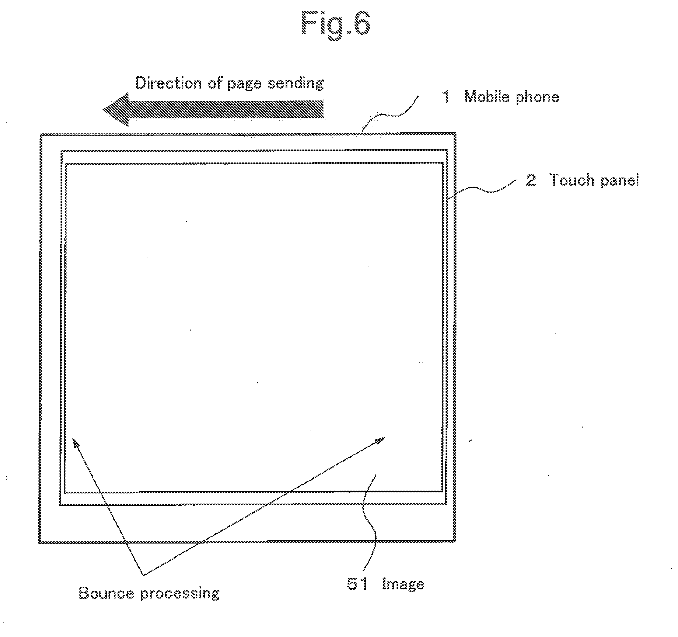

Fig. 5 and Fig. 6 are diagrams illustrating an action when page turning is stopped because a page turning speed has become less than a threshold value in the middle of page turning. Fig. 5 indicates a display screen at the moment when page turning is stopped, and Fig. 6 indicates a diagram after page turning has been stopped.

Indicated here is a case in which, when page turning is stopped and if the number of pages to be turned is not an integer, the images are advanced up to a portion corresponding to a decimal number part once, and then bounded back to return to a full screen. That is, when page turning is stopped in the state that two images (an image 52 which is the next page and a to-be-indicated page 51) are shown on the display unit, the image 52 returns as much as the part that has been indicated in a manner as if it is bounded in the opposite direction of the page turning direction so that the image 51 may be displayed on the full screen (bounce processing).

According to the exemplary embodiment of the present invention, when page turning of a screen and an image is performed in the mobile terminal having the touch panel, page turning of the screen and the image can be performed by a few operations and in a speed that a user desires.

That is, by beginning page turning by user's operation, decelerating a page turning speed to a stopping threshold speed that is given arbitrarily, and reflecting the speed change in the number of turned pages of a screen and an image, page turning of a screen and an image which follows the user's operation becomes possible.

Also, the excellent feature of a touch panel that it can be operated intuitively can be improved.

The exemplary embodiments of the present invention can be carried out not only in a cellular phone but also in a terminal using an arbitrary touch panel, and can be carried out in operation not only by a finger but also by a touch pen and other articles which can touch. Also, it can be carried out not only in a scene of page turning of an image but also in all usage scenes in which a key or an item is selected. When the number of turned pages is not an integer, page turning can be carried out not only by bounce operation but also by a method to rounded down or up the decimal part.

As above, the present invention has been described by the preferred embodiments of the present invention. Although the present invention has been described indicating specific concrete examples here, various modifications and changes are possible to these specific examples without departing from the broad intent and range of the present invention defined in the claims.

This application claims priority based on Japanese Patent Application No. 2008-289232, filed on November 11, 2008, the disclosure of which is incorporated herein in its entirety.

### Industrial Applicability

The present invention can be applied to a mobile terminal and a portable device operated by using a touch panel.

### Description of Symbols

- 1: Mobile terminal
- 2: Touch panel
- 11: Detection unit
- 12: Speed measuring unit
- 13: Page turning unit
- 14: Display unit

## Claims

1. A mobile terminal, comprising:
a detection means for detecting user's touch;
a moving speed calculating means for calculating a moving speed from a moving distance and a travel time of a detection position detected by said detection means; and
a page turning means for indicating a plurality of pieces of data while sending said pieces of data one after another, wherein
said page turning means indicates said pieces of data while sending said pieces of data at a page turning speed decided in advance, determines a deceleration rate according to said moving speed calculated by said moving speed calculating means, and performs indication while decelerating said page turning speed gradually.

2. The mobile terminal according to claim 1, wherein
said page turning means stops page turning when a user's touch is detected again by said detection means during page turning.

3. The mobile terminal according to claim 1, wherein
said page turning means stops page turning when a page turning speed becomes less than a threshold value.

4. The mobile terminal according to any one of claims 1-3, wherein
said mobile terminal comprises a deceleration rate storing means for storing a plurality of threshold values of said moving speed and said deceleration rate in a manner associating said moving speed and said deceleration rate, and wherein
said page turning means determines, from said deceleration rate storing means, a deceleration rate according to a moving speed calculated by said moving speed calculating means, and performs indication while decelerating said page turning speed gradually.

5. The mobile terminal according to any one of claims 1-4, wherein
said page turning means performs indication while skipping a plurality of pieces of data at regular intervals.

6. The mobile terminal according to any one of claims 1-5, wherein
said page turning means makes an order of data sending inverse according to a movement direction of a detection position by said detection means.

7. The mobile terminal according to any one of claims 1-6, wherein,
If no smaller than two pieces of data are indicated when page turning is stopped, pages are moved to a reverse direction in a bounded manner until one piece of data is indicated.

8. A page turning method for a mobile terminal, comprising;
a detection step for detecting user's touch;
a moving speed calculating step for calculating a moving speed from a moving distance and a travel time of a detection position detected in said detection step; and
a page turning step for indicating a plurality of pieces of data while sending said pieces of data one after another, wherein
said page turning step indicates said pieces data while sending said pieces of data at a page turning speed decided in advance, determines a deceleration rate according to said moving speed calculated in said moving speed calculating step, and performs indication while decelerating said page turning speed gradually.

9. A program for making a computer execute processing, comprising:
a detection processing for detecting user's touch;
a moving speed calculation processing for calculating a moving speed from a moving distance and a travel time of a detection position detected by said detection processing; and
a page turning processing for indicating a plurality of pieces of data while sending said pieces of data one after another, wherein
said page turning processing indicates said pieces of data while sending said pieces of data at a page turning speed decided in advance, determines a deceleration rate according to said moving speed calculated by said moving speed calculation processing, and performs indication while decelerating said page turning speed gradually.
